(19) Europäisches Patentamt / European Patent Office / Office européen des brevets

(11) **EP 3 027 805 B2**

(12) **NEW EUROPEAN PATENT SPECIFICATION**
After opposition procedure

(45) Date of publication and mention
of the opposition decision:
**03.07.2024  Bulletin 2024/27**

(45) Mention of the grant of the patent:
**17.02.2021  Bulletin 2021/07**

(21) Application number: **14741306.6**

(22) Date of filing: **18.07.2014**

(51) International Patent Classification (IPC):
**D07B 1/06** (2006.01)

(52) Cooperative Patent Classification (CPC):
(C-Sets available)
**B60C 9/0007; D07B 1/0613;** B60C 2009/2077;
B60C 2009/209; B60C 2009/2096; D07B 3/08;
D07B 7/04; D07B 2201/1044; D07B 2201/1076;
D07B 2201/2011; D07B 2201/2025;
D07B 2201/2029; D07B 2205/3053;
D07B 2205/3057; D07B 2205/3071;          (Cont.)

(86) International application number:
**PCT/EP2014/065541**

(87) International publication number:
**WO 2015/014639 (05.02.2015 Gazette 2015/05)**

(54) **HIGH ELONGATION STEEL CORD AND PNEUMATIC TIRE COMPRISING SAID CORD**

STAHLKORD HOHER DEHNUNG UND LUFTREIFEN MIT SOLCH EINEM STAHLKORD

CÂBLE D'ACIER AVEC ALLONGEMENT À LA RUPTURE ÉLEVÉ ET BANDAGE PNEUMATIQUE
COMPORTANT UN TEL CÂBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.08.2013  CN 201310330114
01.08.2013  CN 201320465533 U**

(43) Date of publication of application:
**08.06.2016  Bulletin 2016/23**

(73) Proprietor: **NV Bekaert SA
8550 Zwevegem (BE)**

(72) Inventors:
• **WANG, He
Jiangyin
Jiangsu 214434 (CN)**
• **DESPIEGELAERE, Roel
B-8510 Marke (BE)**
• **ZHU, Hongzhen
Jiangyin City
Jiangsu 214434 (CN)**

(74) Representative: **Serwas, Harry
NV Bekaert SA
IPD - PC6030
Bekaertstraat 2
8550 Zwevegem (BE)**

(56) References cited:
EP-A1- 0 376 272          EP-A1- 2 218 588
WO-A1-2011/134900         CN-A- 102 666 972
JP-A- 2006 183 211        JP-A- 2006 193 839
JP-A- 2009 248 751        JP-A- 2010 180 483
JP-A- 2010 264 878        JP-A- 2011 068 245
US-A1- 2012 011 823       US-A1- 2012 267 025

• **ANONYMOUS: "Reinforcement of protection
plies or of outermost plies", RESEARCH
DISCLOSURE, MASON PUBLICATIONS,
HAMPSHIRE, GB, vol. 338, no. 77, 1 June 1992
(1992-06-01) , XP007117827, ISSN: 0374-4353**

(52) Cooperative Patent Classification (CPC): (Cont.)
D07B 2205/3089; D07B 2207/4031;
D07B 2401/201; D07B 2401/208

C-Sets
D07B 2205/3053, D07B 2801/10;
D07B 2205/3057, D07B 2801/10;
D07B 2205/3071, D07B 2801/18;
D07B 2205/3089, D07B 2801/18

**Description**

**Technical Field**

The invention relates to a steel cord, and a pneumatic tire comprising the steel cord.

**Background Art**

It is generally known to reinforce rubber products with steel cord, especially for pneumatic tires. The "high elongation" steel cord, as a steel cord, is generally used to reinforce zero degree belt or protection layer of pneumatic tires. Said "high elongation" steel cord refers to steel cord with elongation at break no less than 5%. Elongation at break (•) is an index of the elasticity of the material. Elongation at break is the percentage ratio between the total elongation • L and the original length L of the specimen. •=• L/L×100%. The elongation at break comprises the structural elongation of the steel cord. For example, when a high elongation steel cord is stretched, the extension of the steel cord is firstly the structural elongation. When the steel cord is further stretched, the steel cord may break and result in the elongation at break.

In the tire making process, especially the making of tire with zero degree belt reinforced with high elongation steel cord, high elongation steel cord with high structural elongation is required, otherwise the steel cord may not extent to the right position during the tire lifting process. For now, the commonly used high elongation steel cord 3x7x0.20mm, is the reinforcement for zero degree belt for tire. This structure has a comparatively big strand twist angle and cord twist angle (20.37/20.84 degree), to achieve a comparatively high structural elongation and elongation at break (2.25%/7.17%). But this structure faces the problem for rubber penetration, wherein the steel cord can not be embedded in the rubber matrix properly, and eventually corrosion occurs and limits the life time of pneumatic tire. Therefore, there is a need to seek a high elongation steel cord with high structural elongation and full rubber penetration.

Besides, in the manufacturing process for special pneumatic tires, for example, the super single tire, the zero degree belt of super single tire is only reinforced by one layer of winded steel cord, which requires high elongation steel cord with extra structural elongation to extent to the right position in the tire lifting process. The commonly used high elongation steel cord 3x7x0.20mm with structural elongation (2.25%) can not meet this requirement. Further increase the strand twist angle and cord twist angle to achieve extra structural elongation, will lead to a fragile cord. Even the cord may hold some load, the other mechanical properties of the steel cord, for example, fatigue, breaking load are limited, which cuts the life time of the steel cord. Therefore, there is a need to seek a high elongation steel cord with high structural elongation, for example more than 3.0% structural elongation, while maintaining the small strand twist angle and cord twist angle.

US-A1-2012/0011823 discloses a steel cord with a high elongation at break at least 5% and with a high stiffness. The high elongation at break is obtained by giving a prefoming operation to the strands, so that the strands of the cord are helically preformed. The high stiffness (E-modulus) is obtained by giving a big lay length to the steel cord which is no less than 16mm. the purpose of the invention is to provide a steel cord with high elongation and high stiffness.

**Disclosure of Invention**

The primary object of the invention is to provide a high elongation steel cord with high structural elongation and full rubber penetration.

The other object of the invention is to provide a pneumatic tire comprising that high elongation steel cord with high structural elongation and full rubber penetration.

According to an aspect of the invention, the open steel cord comprises a plurality of strands all twisted together with a cord twist pitch. Each strand comprises a plurality of filaments twisted together with a strand twist pitch. Gaps are present between the filaments and between the strands. The elongation at break of the steel cord is no less than 5%. The strand comprises a strand twist angle. The steel cord comprises a cord twist angle. When the sum of the strand twist angle and the cord twist angle is between 20 and 29 degree, the structural elongation of the steel cord is no less than 2.0%. When the sum of the strand twist angle and the cord twist angle is between 30 and 38 degree, the structural elongation of the steel cord is no less than 2.5%. Not according the invention is when the sum of the strand twist angle and the cord twist angle is between 39 and 48 degree, the structural elongation of the steel cord is no less than 3.0%. All the filaments of the cord have the same diameter. The steel cord has full rubber penetration

Preferably, the structural elongation of the steel cord is 4.0%.

The formula to calculate the strand twist angle and cord twist angle is

$$\alpha = \arctan \frac{\pi d}{Ls * \sin \frac{180^0}{n}}$$

, wherein • is the strand twist angle, d the filament diameter, Ls the strand twist pitch, n the number of filaments in the strand.

$$\beta = \arctan \frac{\pi d(1 + \sin \frac{180^0}{n})}{Lc * \sin \frac{180^0}{m} * \sin \frac{180^0}{n}}$$

wherein • is the cord twist angle, d the filament diameter, Lc the cord twist pitch, m the number of strands in the cord, n the number of filament in the strand.

For now, the commonly used high elongation steel cord can be made according following approaches, increasing the twist pitch of the steel cord, or increasing the filament diameter, or increasing the number of strands. In a word, according to above formula, increasing the twist angle of the steel cord may provide high elongation steel cord. But the twist angle of the steel cord cannot be increased unlimitedly, and there are limits to increase the twist angle of the steel cord. Further increase the strand twist angle and cord twist angle, will eventually result in a fragile cord. Even the cord may hold some load, the other mechanical properties of the steel cord, for example, fatigue, breaking load are limited, which cuts the life time of the steel cord.

Example 1 of US-A1-201210267025 and steel cord 30 of Table 1 in US- A1-2012/0011823 are examples of open steel cords with high values of the sum the strand twist angle with the cord twist angle.

Different from the prior art, present invention provides another approach to achieve high elongation steel cord. The structure of steel cord is more open, the gaps between filaments and strands are bigger, and the elongation at break and structural elongation are higher (with the same twist angle). Because the gaps are bigger, rubber penetration is improved, to meet the requirement on rubber penetration.

According to present invention, the number of strands may preferably between 2 and 7, and the number of filaments in the strand may preferably between 2 and 9.

Besides, the strand can be formed by the steel filament in a single layer structure, i.e. the nx1 structure, or a double layer structure. For example, the strand is a double layer structure, i.e. (m)+n structure, wherein (m) filaments forms the core and n filaments forms the layer surrounding the core. The filament in the core can be parallel without twist (i.e. twist pitch more than 300mm), for example, a strand structure (2)+2. Said twist pitch means the axial distance required to make a 360 degree revolution of steel filament around the axis of the strand or strand around the axis of the cord.

Since the steel cord according to present invention is used for pneumatic tires, the filament diameter of the steel cord can be any parameter known to the technical personal in this field. Preferably, filament diameter may range between 0.10mm and 0.60mm, for example, 0.14mm, 0.26mm, and 0.38mm.

According to present invention, the metal filament is a steel filament. The steel composition may contain a minimum carbon content of 0.65% and small amount of manganese, silicon, sulphur, phosphorus and so on. For example, comprising 0.70% carbon, 0.50% manganese, 0.202% silicon, 0.013% sulphur, and 0.085% phosphorus, all percentages being percentage by weight. Specifically, high carbon steel filament may have a carbon content about 0.80%, for example, 0.78-1.02% carbon, 0.30%-1.10% manganese, 0.15%-1.30% silicon, less than 0.15% sulphur, and less than 0.02% phosphorus, all percentages being percentage by weight. Further, the steel composition may contain other metal alloy ingredients, for example, 0.20%-0.40% chromium, 0.20% copper, and 0.30% vanadium, all percentages being percentage by weight.

According to present invention, the metal filament may be coated, and preferably with zinc coating or brass coating. The thickness of the coating can be any parameter known to the technical personals in this field, for example, brass coating with thickness 0.2 micrometer.

According to one of the best embodiments of present invention, the steel cord comprises three strands, each strand comprises four steel filaments, filament diameter is 0.24mm, the strand twist angle is 13.62 degree, the cord twist angle is 14.72 degree, the sum of the two twist angles is 28.34 degree, the structural elongation of the steel cord is 2.42%, and the elongation at break of the steel cord is 6.19%.

According to one of the best embodiments of present invention, the steel cord comprises three strands, each strand comprises four steel filaments, filament diameter is 0.26mm, the strand twist angle is 14.71 degree, the cord twist angle is 15.89 degree, the sum of the two twist angles is 30.6 degree, the structural elongation of the steel cord is 2.99%, and the elongation at break of the steel cord is 7.14%.

According to one of the best embodiments of present invention, the steel cord comprise three strands, each strand comprises four steel filaments, filament diameter is 0.26mm, the strand twist angle is 16.11 degree, the cord twist angle is 15.89 degree, the sum of the two twist angles is 32 degree, the structural elongation of the steel cord is 3.28%, and the elongation at break of the steel cord is 7.92%.

The steel cord has extra structural elongation, which is suitable to reinforce the zero degree belt for the super single tire with one layer of winded steel cord. To the contrary, prior art increase the twist angles of the steel cord to provide a steel cord with extra structural elongation, for example structural elongation more than 3%. But the twist angle of the steel cord can not be increased unlimitedly, and there are limits to increase the twist angle of the steel cord. Further increasing the strand twist angle and cord twist angle, will eventually result in a fragile cord. Even the cord may hold some load, the other mechanical properties of the steel cord, for example, fatigue, breaking load may deteriorate.

According to one of the best embodiments of present invention, the steel cord comprises four strands, each strand comprises four steel filaments, filament diameter is 0.22mm, the strand twist angle is 12.52 degree, the cord twist angle is 16.43 degree, the sum of the two twist angles is 28.95 degree, the structural elongation of the steel cord is 2.97%, and the elongation at break of the steel cord is 6.69%.

According to the other aspect of present invention, a pneumatic tire comprises carcass, belt, zero degree belt and crown. The zero degree belt comprises steel cord and rubber matrix where the steel cord embedded. The steel cord comprises a plurality of strands twisted together with a cord twist pitch. Each strand comprises a plurality of filaments twisted together with a strand twist pitch. The elongation at break of the steel cord is no less than 5%. The strand comprises a strand twist angle. The steel cord comprises a cord twist angle. When the sum of the strand twist angle and the cord twist angle is between 20 and 29 degree, the structural elongation of the steel cord is no less than 2.0%. When the sum of the strand twist angle and the cord twist angle is between 30 and 38 degree, the structural elongation of the steel cord is no less than 2.5%. Not according the invention is when the sum of the strand twist angle and the cord twist angle is between 39 and 48 degree, the structural elongation of the steel cord is no less than 3.0%. Preferably, the structural elongation of the steel cord is 4.0%.

According to another aspect of present invention, a pneumatic tire comprises carcass, belt and crown. The belt comprises transition layer, working layer and protection layer. The protection layer comprises steel cord and rubber matrix where the steel cord embedded. The steel cord comprises a plurality of strands twisted together with a cord twist pitch. Each strand comprises a plurality of filaments twisted together with a strand twist pitch. The elongation at break of the steel cord is no less than 5%. The strand comprises a strand twist angle. The steel cord comprises a cord twist angle. When the sum of the strand twist angle and the cord twist angle is between 20 and 29 degree, the structural elongation of the steel cord is no less than 2.0%. When the sum of the strand twist angle and the cord twist angle is between 30 and 38 degree, the structural elongation of the steel cord is no less than 2.5%. Not according the invention is when the sum of the strand twist angle and the cord twist angle is between 39 and 48 degree, the structural elongation of the steel cord is no less than 3.0%. Preferably, the structural elongation of the steel cord is 4.0%.

As disclosed above, "twist pitch" twist pitch means the axial distance required to make a 360 degree revolution of steel filament around the axis of the strand or strand around the axis of the cord.


**Brief Description of Figures in the Drawings**

- Figure 1 schematically illustrates the method to determine the structural elongation and elongation at break of steel cord incorporating present invention.
- Figure 2 schematically illustrates the cross-sectional view of a 3x4 steel cord incorporating present invention.
- Figure 3 is the front view of a plurality of steel cord in parallel incorporating present invention.
- Figure 4a schematically illustrates the manufacturing process for a steel cord according to prior arts.
- Figure 4b schematically illustrates the manufacturing process for a steel cord incorporating present invention.
- Figure 5 schematically illustrates the cross-sectional view of a 4x4 steel cord incorporating present invention.
- Figure 6a is the cross-sectional view of a 3x4 steel cord incorporating present invention with rubber penetration.
- Figure 6b is the cross-sectional view of a 3x4 steel cord according to prior arts with rubber penetration.


**Mode(s) for Carrying Out the Invention**

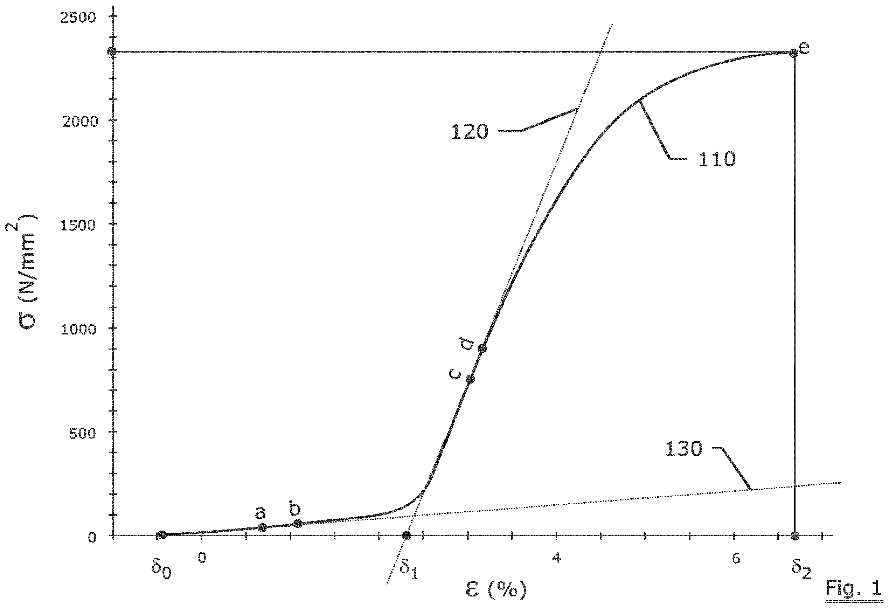

Figure 1 schematically illustrates the method to determine the structural elongation and elongation at break of steel cord incorporating present invention. In figure 1, curve 110 is the tensile-elongation curve of the steel cord. As shown by curve 110, the steel cord firstly goes through the structural elongation phase and further enters into the elastic deformation phase. 120 is the elasticity modulus line, i.e. line 120 connects two points c, d at the elastic phase on curve 110. The point of intersection between line 120 and the abscissa axis is • 1. 130 is the structural elongation regression line, i.e. line 130 connects two points a, b at the structural elongation phase on curve 110. The point of intersection between line 130 and the abscissa axis is •0. The sum of |•1| and |•0| is the structural elongation of the steel cord. The break point e, the end point of curve 110, of the steel cord, has an orthographic projection point •2 on the abscissa axis, while |•2| is the elongation at break of the steel cord.

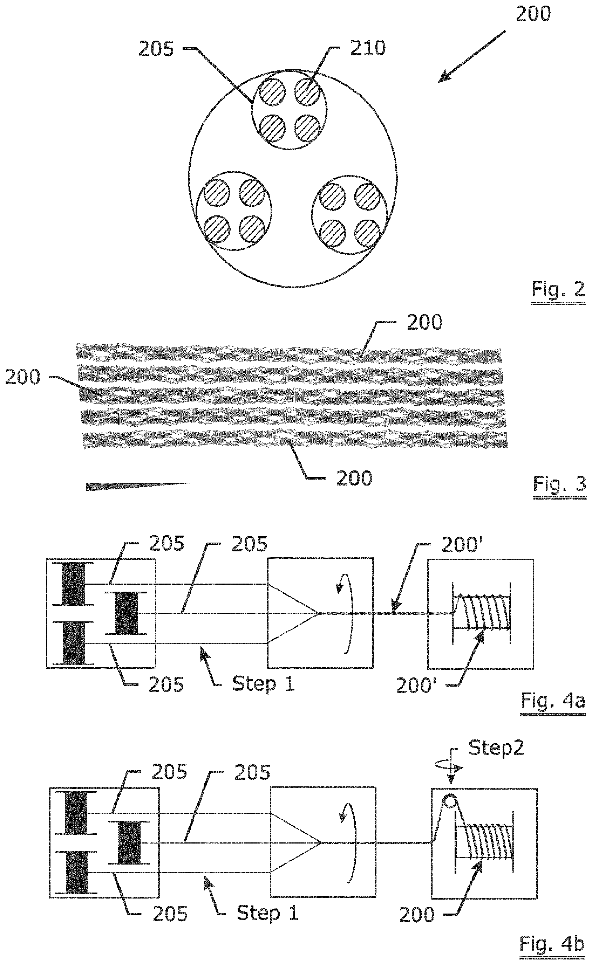

Figure 2 schematically illustrates the cross-sectional view of a 3x4 steel cord incorporating present invention. Figure 3 is the front view of a plurality of steel cord in parallel incorporating present invention. As shown in figure 2, steel cord 200 is a 3x4 structure. The steel cord comprises three strands 205 twisted together, and each strand 250 compriese four steel filaments 210 twisted together. The steel filament diameter is 0.24mm. The strand twist angle is 13.62 degree, and the cord twist angle is 14.72 degree. The sum of the two twist angles is 28.34 degree.

The prior art steel cord 200' can be manufactured according to following step. Firstly the four steel filaments 210 are twisted together to form the strand 205, and then the three strands 205 are twisted together according to the step shown in figure 4a to form the prior art steel cord 200', wherein the twist pitch is 8mm, i.e. 125 twists in one meter length. In the first embodiment of present invention, steel strands 205 are twisted together according to the two steps shown in figure 4b. The first step is to twist the three steel strand 205 together with the twist pitch 5.33mm, i.e. 187.5 twists in one meter length. The second step is to give reverse twist at the take-up station to increase the twist pitch to 8mm, i.e. reverse twist 62.5 rounds in one meter length to achieve the final twist 125 rounds in one meter length. The steel cord 200 incorporating present invention has a strand twist angle 13.62 degree, a cord twist angle 14.72 degree, and the sum of the two twist angles is 28.34 degree (as shown by figure 2).

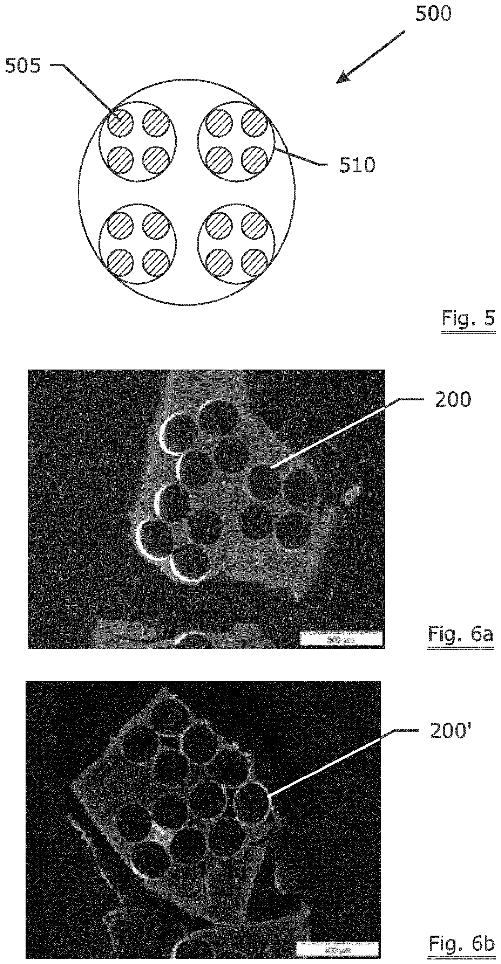

Figure 5 schematically illustrates the cross-sectional view of a 4x4 steel cord of the second embodiment. The steel cord 500 is a 4x4 structure. The steel cord comprises four steel strands 510 twisted together, and each steel strand 510 compriese four steel filaments 505 twisted together. The diamter of filament 505 is 0.26mm. The strand twist angle is 14.71 degree, the cord twist angle is 15.89 degree, and the sum of the two twist angles is 30.6 degree.

Below table 1 shows the comparison test between the embodiments and prior arts.

|  | 3x4 (prior art) | 3x4 (invention) | 4x4 (prior art) | 4x4 (invention) |
|---|---|---|---|---|
| Strand/cord twist pitch (mm) | 4.4/8 | 4.4/8 | 4.4/8 | 4.4/8 |
| Strand twist angle (degree) | 13.62 | 13.62 | 12.52 | 12.52 |
| Cord twist angle (degree) | 14.72 | 14.72 | 16.43 | 16.43 |
| Elongation at break (%) | 4.45 | 6.19 | 4.78 | 6.69 |
| Structural elongation (%) | 1.35 | 2.42 | 1.38 | 2.97 |
| Air pressure drop (%) | 70 | 0 | 55 | 0 |

As shown in table 1, with the same strand twist angle and cord twist angle, steel cord incorporating present invention has a higher structural elongation and elongation at breaked compared with prior arts, which can avoid the belt seperation problem in the tire making process. Besides, the rubber penetration is also improved. The lower air pressure drop the better rubber penetration. Air pressure drop 0% means full rubber penetration. The test method for air pressure drop is disclosed by CN102666972A. As shown by figure 6a and 6b, present invention steel cord 200 achieves full rubber penetration, while prior art steel cord 200' has limited rubber penetration, wherein corrsion may occur inside the strand. Present invention steel cord has an open structure to allow full rubber penetration not only between the strands but also inside the strands, to avoid corrosion on the filaments, which further improved the lifetime of the steel cord for the reinforcement of pneumatic tires, especially for the reinforcement of zero degree belt of pneumatic tires.

Besides, one prior art steel cord 3×4×0.24 may has the same steel cord structure and comparable structural elongation as present invention, but the mechanical properties are different as shown in below table 2.

|  |  | Present invention | Prior art |
|---|---|---|---|
| Twist pitch / mm | strand | 4.4 | 3 |
|  | cord | 8 | 6 |
| Twist angle / degree | Strand | 13.62 | 19.57 |
|  | cord | 14.72 | 19.31 |
| Breaking load / N |  | 1508 | 1351 |

(continued)

|  | | Present invention | Prior art |
|---|---|---|---|
| Structural elongation % | | 2.42 | 2.35 |
| Elongation at break % | | 6.19 | 7.57 |
| Air pressure drop % | | 0 | 90 |
| Linear density | | 4.67 | 4.89 |
| Belt ply weight % (same strength) | | 100 | 107 |
| Belt ply cost % (same strength | | 100 | 106 |

Table 2 shows that prior art steel cord may achieve similar structural elongation, but prior art steel cord requires big strand twist angle and cord twist angle, which undercut the breaking load of the steel cord. While present invention steel cord has smaller strand twist angle and cord twist angle with lower linear density to provide a lighter belt ply with low cost. Pneumatic tire reinforced by present invention steel cord not only requires less material but also brings lower rolling resistance.

As the third embodiment of present invention, the 5x2 steel cord comprises 5 strands and each strand comprises 2 steel filaments. The filament diameter is 0.26mm. The strand twist angle is 10.52 degree, the cord twist angle is 19.16 degree, and the sume of the two twist angles is 29.68 degree. The elongation at break of the steel cord is 6.27%, and the structural elongation of the steel cord is 2.78%.

## Claims

1. An open steel cord (200), comprising a plurality of strands (205) all twisted together with a cord twist pitch, said each strand (205) comprising a plurality of filaments (210) twisted together with a strand twist pitch, the elongation at break of said steel cord (200) is greater than or equal to 5%, said strand (205) comprising a strand twist angle $\alpha$, said steel cord (200) comprising a cord twist angle $\beta$, all the filaments (210) of said steel cord (200) having the same diameter,

   said strand twist angle $\alpha$ being determined by the formula:

   $$\alpha = \arctan \frac{\pi d}{Ls * \sin \frac{180^0}{n}} ,$$

   said cord twist angle $\beta$ being determined by the formula:

   $$\beta = \arctan \frac{\pi d (1 + \sin \frac{180^0}{n})}{Lc * \sin \frac{180^0}{m} * \sin \frac{180^0}{n}}$$

   d being the filament diameter, Ls being the strand twist pitch, Lc being the cord twist pitch, n being the number of filaments in the strand, m being the number of strands in the cord,
   **characterized in that** said steel cord (200) comprising gaps between filaments (210) and gaps between strands (205), the sum of said strand twist angle $\alpha$ and said cord twist angle $\beta$ is between 20 and 29 degree, the structural elongation of said steel cord (200) is greater than or equal to 2.0%, and said steel cord has full rubber penetration.

2. An open steel cord (200), comprising a plurality of strands (205) all twisted together with a cord twist pitch, said each strand (205) comprising a plurality of filaments (210) twisted together with a strand twist pitch, the elongation at break of said steel cord (200) is greater than or equal to 5%, said strand (205) comprising a strand twist angle $\alpha$,

said steel cord (200) comprising a cord twist angle β, all the filaments (210) of said steel cord (200) having the same diameter,

said strand twist angle α being determined by the formula:

$$\alpha = \arctan \frac{\pi d}{Ls * \sin \frac{180^0}{n}},$$

said cord twist angle β being determined by the formula:

$$\beta = \arctan \frac{\pi d (1 + \sin \frac{180^0}{n})}{Lc * \sin \frac{180^0}{m} * \sin \frac{180^0}{n}}$$

d being the filament diameter, Ls being the strand twist pitch, Lc being the cord twist pitch, n being the number of filaments in the strand, m being the number of strands in the cord,
**characterized in that** said steel cord (200) comprising gaps between filaments (210) and gaps between strands (205), the sum of said strand twist angle α and said cord twist angle β is between 30 and 38 degree, the structural elongation of said steel cord (200) is greater than or equal to 2.5%, and said steel cord has full rubber penetration.

3. A steel cord (200) according to claim 1 or 2, **characterized in that** the structural elongation of said steel cord (200) is equal to 4.0%.

4. A steel cord (200) according to claim 3, **characterized in that** the number of said strand (205) is between 2 and 7, the number of said filaments (210) in the strand (205) is between 2 and 9.

5. A steel cord (200) according to any one of claims 1 to 4, **characterized in that** the diameter of the said filament (210) is between 0.10mm and 0.60mm.

6. A steel cord (200) according to any one of claims 1 to 5, **characterized in that** the filaments (210) in the strand (205) are constructed in a single layer or double layer structure.

7. A pneumatic tire, comprising carcass, belt, zero degree belt and crown, **characterized in that** said zero degree belt comprises steel cord (200) according to any one of claims 1 to 6 and the rubber matrix where the steel cord (200) embedded.

8. A pneumatic tire, comprising carcass, belt and crown, said belt comprising transition layer, working layer and protection layer, **characterized in that** said protection layer comprises steel cord (200) according to any one of claims 1 to 6 and the rubber matrix where the steel cord (200) embedded.

**Patentansprüche**

1. Offener Stahlcord (200), umfassend eine Vielzahl von Strängen (205), die alle mit einer Corddrallsteigung miteinander verdrallt sind, wobei jeder Strang (205) eine Vielzahl von Filamenten (210) umfasst, die mit einer Strangdrallsteigung miteinander verdrallt sind, wobei die Bruchdehnung des Stahlcords (200) größer als oder gleich 5 % ist, wobei der Strang (205) einen Strangdrallwinkel α umfasst, der Stahlcord (200) einen Corddrallwinkel β umfasst, alle der Filamente (210) des Stahlcords (200) denselben Durchmesser aufweisen,

der Strangdrallwinkel α durch die folgende Formel bestimmt wird:

$$\alpha = \arctan \frac{\pi d}{Ls * \sin \frac{180°}{n}} \ ,$$

der Corddrallwinkel $\beta$ durch die folgende Formel bestimmt wird:

$$\beta = \arctan \frac{\pi d(1 + \sin \frac{180°}{n})}{Lc * \sin \frac{180°}{m} * \sin \frac{180°}{n}} \ ,$$

wobei d der Filamentdurchmesser ist, Ls die Strangdrallsteigung ist, Lc die Corddrallsteigung ist, n die Anzahl der Filamente in dem Strang ist, m die Anzahl der Stränge in dem Cord ist, **dadurch gekennzeichnet, dass** der Stahlcord (200) Lücken zwischen Filamenten (210) und Lücken zwischen Strängen (205) umfasst, die Summe des Strangdrallwinkels $\alpha$ und des Corddrallwinkels $\beta$ zwischen 20 und 29 Grad liegt, die Strukturdehnung des Stahlcords (200) größer als oder gleich 2,0 % ist, und der Stahlcord vollständige Kautschukpenetration aufweist.

2.   Offener Stahlcord (200), umfassend eine Vielzahl von Strängen (205), die alle mit einer Corddrallsteigung miteinander verdrallt sind, wobei jeder Strang (205) eine Vielzahl von Filamenten (210) umfasst, die mit einer Strangdrallsteigung miteinander verdrallt sind, wobei die Bruchdehnung des Stahlcords (200) größer als oder gleich 5 % ist, wobei der Strang (205) einen Strangdrallwinkel $\alpha$ umfasst, der Stahlcord (200) einen Corddrallwinkel $\beta$ umfasst, alle der Filamente (210) des Stahlcords (200) denselben Durchmesser aufweisen,

der Strangdrallwinkel $\alpha$ durch die folgende Formel bestimmt wird:

$$\alpha = \arctan \frac{\pi d}{Ls * \sin \frac{180°}{n}} \ ,$$

der Corddrallwinkel $\beta$ durch die folgende Formel bestimmt wird:

$$\beta = \arctan \frac{\pi d(1 + \sin \frac{180°}{n})}{Lc * \sin \frac{180°}{m} * \sin \frac{180°}{n}} \ ,$$

wobei d der Filamentdurchmesser ist, Ls die Strangdrallsteigung ist, Lc die Corddrallsteigung ist, n die Anzahl der Filamente in dem Strang ist, m die Anzahl der Stränge in dem Cord ist, **dadurch gekennzeichnet, dass** der Stahlcord (200) Lücken zwischen Filamenten (210) und Lücken zwischen Strängen (205) umfasst, die Summe des Strangdrallwinkels $\alpha$ und des Corddrallwinkels $\beta$ zwischen 30 und 38 Grad liegt, die Strukturdehnung des Stahlcords (200) größer als oder gleich 2,5 % ist, und der Stahlcord vollständige Kautschukpenetration aufweist.

3.   Stahlcord (200) nach Anspruch 1 oder 2, **dadurch gekennzeichnet, dass** die Strukturdehnung des Stahlcords (200) gleich 4,0 % ist.

4.   Stahlcord (200) nach Anspruch 3, **dadurch gekennzeichnet, dass** die Anzahl der Stränge (205) zwischen 2 und 7 liegt, die Anzahl der Filamente (210) in dem Strang (205) zwischen 2 und 9 liegt.

5. Stahlcord (200) nach einem der Ansprüche 1 bis 4, **dadurch gekennzeichnet, dass** der Durchmesser des Filaments (210) zwischen 0,10 mm und 0,60 mm liegt.

6. Stahlcord (200) nach einem der Ansprüche 1 bis 5, **dadurch gekennzeichnet, dass** die Filamente (210) in dem Strang (205) in einer Einzelschicht- oder Doppelschichtstruktur aufgebaut sind.

7. Luftreifen, umfassend Karkasse, Gürtel, Null-Grad-Gürtel und Krone, **dadurch gekennzeichnet, dass** der Null-Grad-Gürtel Stahlcord (200) gemäß einem der Ansprüche 1 bis 6 und die Kautschukmatrix umfasst, in die der Stahlcord (200) eingebettet ist.

8. Luftreifen, umfassend Karkasse, Gürtel und Krone, wobei der Gürtel Übergangsschicht, Arbeitsschicht und Schutzschicht umfasst, **dadurch gekennzeichnet, dass** die Schutzschicht Stahlcord (200) gemäß einem der Ansprüche 1 bis 6 und die Kautschukmatrix umfasst, in die der Stahlcord (200) eingebettet ist.

**Revendications**

1. Câble d'acier ouvert (200), comprenant une pluralité de torons (205) tous tordus ensemble avec un pas de torsion de câble, chacun desdits torons (205) comprenant une pluralité de filaments (210) tordus ensemble avec un pas de torsion de toron, l'allongement à la rupture dudit câble d'acier (200) est supérieur ou égal à 5 %, ledit toron (205) comprenant un angle de torsion de toron $\alpha$, ledit câble d'acier (200) comprenant un angle de torsion de câble $\beta$, tous les filaments (210) dudit câble d'acier (200) ayant le même diamètre, ledit angle de torsion de toron $\alpha$ étant déterminé par la formule :

$$\alpha = arctan(\frac{\pi d}{Ls*sin\left(\frac{180°}{n}\right)})$$

ledit angle de torsion de câble $\beta$ étant déterminé par la formule :

$$\beta = arctan(\frac{\pi d\left(1+sin\left(\frac{180°}{n}\right)\right)}{Lc*sin\left(\frac{180°}{m}\right)*sin\left(\frac{180°}{n}\right)})$$

d étant le diamètre de filament, Ls étant le pas de torsion de toron, Lc étant le pas de torsion de câble, n étant le nombre de filaments dans le toron, m étant le nombre de torons dans le câble, **caractérisé en ce que** ledit câble d'acier (200) comprend des espaces entre des filaments (210), et des espaces entre des torons (205), la somme dudit angle de torsion de toron $\alpha$ et dudit angle de torsion de câble $\beta$ est comprise entre 20 et 29 degrés, l'allongement structurel dudit câble d'acier (200) est supérieur ou égal à 2,0 %, et ledit câble d'acier a une pénétration totale du caoutchouc.

2. Câble d'acier ouvert (200), comprenant une pluralité de torons (205) tous tordus ensemble avec un pas de torsion de câble, chacun desdits torons (205) comprenant une pluralité de filaments (210) tordus ensemble avec un pas de torsion de toron, l'allongement à la rupture dudit câble d'acier (200) est supérieur ou égal à 5 %, ledit toron (205) comprenant un angle de torsion de toron $\alpha$, ledit câble d'acier (200) comprenant un angle de torsion de câble $\beta$, tous les filaments (210) dudit câble d'acier (200) ayant le même diamètre, ledit angle de torsion de toron $\alpha$ étant déterminé par la formule :

$$\alpha = arctan(\frac{\pi d}{Ls*sin\left(\frac{180°}{n}\right)})$$

ledit angle de torsion de câble $\beta$ étant déterminé par la formule :

$$\beta = arctan\left(\frac{\pi d \left(1+sin\left(\frac{180°}{n}\right)\right)}{Lc * sin\left(\frac{180°}{m}\right) * sin\left(\frac{180°}{n}\right)}\right)$$

d étant le diamètre de filament, Ls étant le pas de torsion de toron, Lc étant le pas de torsion de câble, n étant le nombre de filaments dans le toron, m étant le nombre de torons dans le câble, **caractérisé en ce que** ledit câble d'acier (200) comprend des espaces entre des filaments (210), et des espaces entre des torons (205), la somme dudit angle de torsion de toron α et dudit angle de torsion de câble β est comprise entre 30 et 38 degrés, l'allongement structurel dudit câble d'acier (200) est supérieur ou égal à 2,5 %, et ledit câble d'acier a une pénétration totale du caoutchouc.

3.  Câble d'acier (200) selon la revendication 1 ou 2, **caractérisé en ce que** l'allongement structurel dudit câble d'acier (200) est égal à 4,0 %.

4.  Câble d'acier (200) selon la revendication 3, **caractérisé en ce que** le nombre desdits torons (205) est compris entre 2 et 7, le nombre desdits filaments (210) dans le toron (205) est compris entre 2 et 9.

5.  Câble d'acier (200) selon l'une quelconque des revendications 1 à 4, **caractérisé en ce que** le diamètre dudit filament (210) est compris entre 0,10 mm et 0,60 mm.

6.  Câble d'acier (200) selon l'une quelconque des revendications 1 à 5, **caractérisé en ce que** les filaments (210) dans le toron (205) sont construits dans une structure à une seule couche ou à deux couches.

7.  Bandage pneumatique comprenant une carcasse, une ceinture, une ceinture à zéro degré et une couronne, **caractérisé en ce que** ladite ceinture à zéro degré comprend un câble d'acier (200) selon l'une quelconque des revendications 1 à 6 et la matrice de caoutchouc dans laquelle le câble d'acier (200) est intégré.

8.  Bandage pneumatique, comprenant une carcasse, une ceinture et une couronne, ladite ceinture comprenant une couche de transition, une couche de travail et une couche de protection, **caractérisé en ce que** ladite couche de protection comprend un câble d'acier (200) selon l'une quelconque des revendications 1 à 6 et la matrice de caoutchouc dans laquelle le câble d'acier (200) est intégré.

Fig. 1

Fig. 2

Fig. 3

Fig. 4a

Fig. 4b

Fig. 5

Fig. 6a

Fig. 6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120011823 A1
- US 201210267025 A1

- CN 102666972 A